# EUROPEAN PATENT APPLICATION

(11) **EP 4 765 296 A1**
(43) Date of publication of application: **24.06.2026**
(21) Application number: 24915431.1
(22) Date of filing: 27.12.2024
(51) Int. Cl.: H01M 10/058, H01M 50/536, H01M 50/531, H01M 10/04

(54) **RECHARGEABLE BATTERY AND METHOD FOR MANUFACTURING RECHARGEABLE BATTERY**

(30) Priority: 05.01.2024 KR 20240002261
(71) Applicant: LG Energy Solution, Ltd., Seoul 07335 (KR)
(72) Inventor: HONG, Ji Su, Daejeon 34122 (KR); KIM, Su Hwan, Daejeon 34122 (KR); LEE, Seung Hyun, Daejeon 34122 (KR)
(74) Representative: Plasseraud IP
(86) International application number: PCT/KR2024/021251
(87) International publication number: WO 2025/147019

(57) **Abstract**

The present disclosure relates to a secondary battery that can be charged and discharged and a method for manufacturing the secondary battery that can be charged and discharged. A secondary battery according to an embodiment of the present disclosure may include a plurality of electrode assemblies each having an electrode tab bundle, an interposed electrode interposed between the plurality of electrode assemblies, and a case accommodating the plurality of electrode assemblies and the interposed electrode.

## Description

### TECHNICAL FIELD

### CROSS-REFERENCE TO RELATED APPLICATIONS

The present application claims priority to Korean Patent Application No. 10-2024-0002261 filed on January 5, 2024 in the Republic of Korea, the disclosures of which are incorporated herein by reference.

### TECHNICAL FIELD

The present disclosure relates to a secondary battery that can be charged and discharged and a method for manufacturing the secondary battery that can be charged and discharged.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

Such a secondary battery may have a shape in which an electrode assembly composed of an electrode and a separator is accommodated inside an exterior material. At this time, an uncoated portion (electrode tab) that is not coated with an active material is formed on each of the electrodes in the electrode assembly, and these electrode tabs may be welded together to form a single electrode tab bundle. The electrode tab bundle is connected to an electrode lead, and the electrode lead may transmit the electric energy of the electrode assembly to the outside.

To increase the energy capacity of the secondary battery, it is advantageous to increase the thickness of the electrode assembly accommodated inside the exterior material to generate electric energy. However, when the electrode assembly becomes thicker, the electrode tabs should become longer by the increased thickness of the electrode assembly in order to be welded together to form an electrode tab bundle. The electrode tab having such an increased length has the problem of being easily torn by an external impact or easily broken during the electrode rolling process. Additionally, when the length of the electrode tab is increased, there is a problem that the electrode tab cannot withstand the tension and is damaged in the event of a swelling phenomenon in which the electrode assembly expands due to use of the secondary battery.

### SUMMARY

### TECHNICAL PROBLEM

The present disclosure is designed to solve the problems of the related art, and therefore the present disclosure is directed to providing a secondary battery with improved energy capacity without increasing the length of an electrode tab and a method for manufacturing the secondary battery.

### TECHNICAL SOLUTION

A secondary battery according to an embodiment of the present disclosure may include a plurality of electrode assemblies each having an electrode tab bundle; an interposed electrode interposed between the plurality of electrode assemblies; and a case accommodating the plurality of electrode assemblies and the interposed electrode.

The secondary battery may further include an electrode lead connected to the electrode tab bundle of each of the plurality of electrode assemblies and an electrode tab of the interposed electrode.

The electrode tab bundle may be an uncoated portion assembly in which uncoated portions of electrodes, included in an electrode assembly are welded.

The plurality of electrode assemblies may include a first electrode assembly provided above the interposed electrode; and a second electrode assembly provided below the interposed electrode.

A first electrode tab bundle provided in the first electrode assembly may be welded to one side of the electrode lead, and a second electrode tab bundle provided in the second electrode assembly may be welded to the other side of the electrode lead.

The electrode lead may include a coupling portion where the first electrode tab bundle and the second electrode tab bundle are coupled by welding; and a protrusion connected to the coupling portion and protruding to the outside of the case.

The coupling portion may be formed thicker than the protrusion.

The interposed electrode may be welded to one side of the electrode lead together with the first electrode tab bundle, or to the other side of the electrode lead together with the second electrode tab bundle.

An outermost layer of each electrode assembly may be configured as a separator.

The interposed electrode interposed between the plurality of electrode assemblies may be a positive electrode.

Meanwhile, a method for manufacturing a secondary battery according to another embodiment of the present disclosure may include a preparation step of preparing a plurality of electrode assemblies each having an electrode tab bundle and an interposed electrode; an electrode insertion step of interposing the interposed electrode between the plurality of electrode assemblies; a connection step of connecting the electrode tab bundle of each of the plurality of electrode assemblies and an electrode tab of the interposed electrode to an electrode lead; and a packaging step of accommodating the plurality of electrode assemblies and the interposed electrode in a case.

The connection step may include a pre-welding step of welding the electrode tab of the interposed electrode interposed between the plurality of electrode assemblies to the adjacent electrode tab bundle; and a main welding step of welding the electrode tab bundle of each of the plurality of electrode assemblies and the electrode tab of the interposed electrode to the electrode lead.

In the pre-welding step, the electrode tab of the interposed electrode may be welded to the first electrode tab bundle of the first electrode assembly provided thereabove, or to the second electrode tab bundle of the second electrode assembly provided therebelow.

The main welding step may include a step of welding the electrode tab bundle of each of the plurality of electrode assemblies and the electrode tab of the interposed electrode to the coupling portion of the electrode lead.

In the main welding step, the first electrode tab bundle of the first electrode assembly provided above the interposed electrode may be welded to one side of the coupling portion, and the second electrode tab bundle of the second electrode assembly provided below the interposed electrode may be welded to the other side of the coupling portion.

In the electrode insertion step, the interposed electrode interposed between the plurality of electrode assemblies may be a positive electrode.

### ADVANTAGEOUS EFFECTS

A secondary battery according to an embodiment of the present disclosure may include a plurality of electrode assemblies each having an electrode tab bundle, an electrode interposed between the plurality of electrode assemblies, and a case accommodating the plurality of electrode assemblies and the electrode. In this case, there is an advantageous effect of improving the overall energy capacity of the secondary battery without increasing the length of the electrode tabs included in each of the electrode assemblies.

### BRIEF DESCRIPTION OF THE DRAWINGS

FIG. 1 is a cross-sectional view for describing an internal structure of a secondary battery according to an embodiment of the present disclosure.
FIG. 2 is a view for describing a state in which an interposed electrode is coupled to an upper side of an electrode lead in a secondary battery according to an embodiment of the present disclosure.
FIG. 3 is a view for describing a state in which an interposed electrode is coupled to a lower side of an electrode lead in a secondary battery according to an embodiment of the present disclosure.
FIG. 4 is a flow chart sequentially showing a method for manufacturing a secondary battery according to another embodiment of the present disclosure.
FIG. 5 is a flow chart sequentially showing the connection step of FIG. 4.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery and a method for manufacturing a secondary battery according to the present disclosure will be described with reference to the drawings.

### Secondary battery

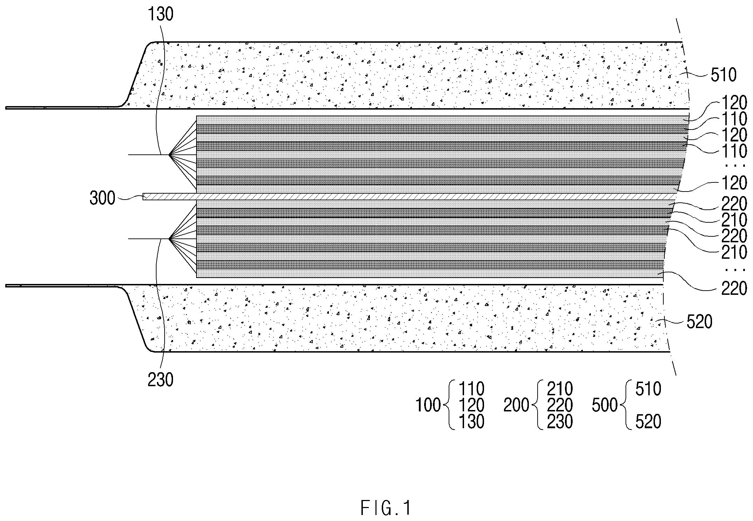

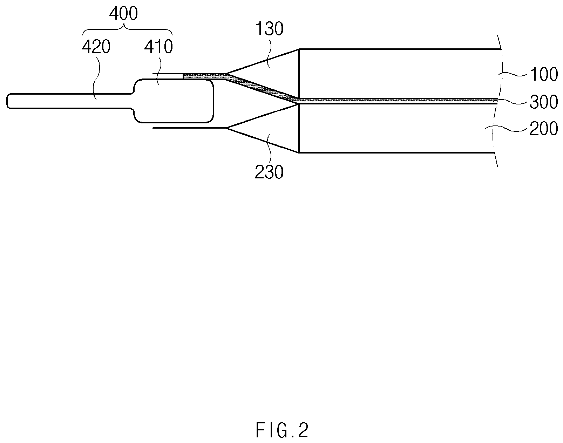

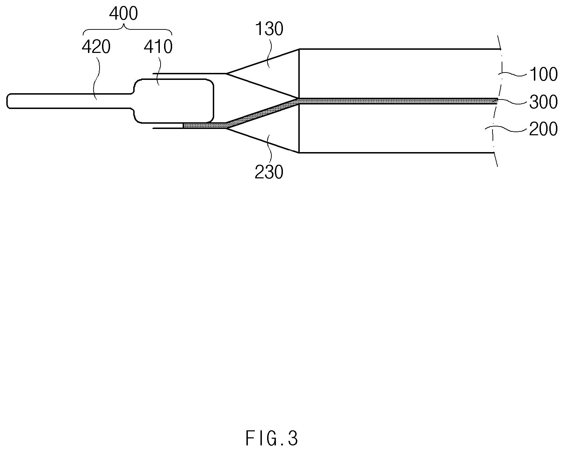

FIG. 1 is a cross-sectional view for describing an internal structure of a secondary battery according to an embodiment of the present disclosure. FIG. 2 is a view for describing a state in which an interposed electrode is coupled to an upper side of an electrode lead in a secondary battery according to an embodiment of the present disclosure. FIG. 3 is a view for describing a state in which an interposed electrode is coupled to a lower side of an electrode lead in a secondary battery according to an embodiment of the present disclosure.

Referring to FIGS. 1 to 3, a secondary battery 10 according to the present disclosure may include a plurality of electrode assemblies 100, 200 each having electrode tab bundles 130, 230; an interposed electrode 300 interposed between the plurality of electrode assemblies 100, 200; and a case 500 accommodating the plurality of electrode assemblies 100, 200 and the interposed electrode 300. In this case, the electrode tab bundles 130, 230 are respectively provided in each of the electrode assemblies 100, 200, so that even when a plurality of electrode assemblies 100, 200 are included within the case 500, there is an advantageous effect that the length of the electrode tab bundles 130, 230 does not increase.

Here, the electrode assemblies 100, 200 are an assembly composed of electrodes 110, 210 and separators 120, 220 interposed between the electrodes 110, 210, and may have various structures. For example, as shown in FIGS. 1 to 3, the electrode assemblies 100, 200 may have a stacked structure in which a plurality of electrodes 110, 210 and separators 120, 220 are alternately stacked.

Additionally, although not shown in FIGS. 1 to 3, the electrode assemblies 100, 200 may have a stack-folding structure in which the electrodes 110, 210 and the separators 120, 220 are stacked and folded, or a jelly-roll structure in which a stack where the electrodes 110, 210 and the separators 120, 220 are stacked is wound.

Meanwhile, the electrodes 110, 210 included in the electrode assemblies 100, 200 are positive electrodes or negative electrodes, and the electrode assemblies 100, 200 may be accommodated inside the case 500 in a state of being impregnated with an electrolyte.

The positive electrode may have a structure in which a mixture composed of an active material, a conductive material, a binder, and the like is applied to a thin plate made of a metal such as aluminum, and a coating layer may be formed on a portion of the positive electrode. At this time, a positive electrode uncoated portion on which the coating layer is not formed may become a positive electrode tab, and these positive electrode tabs may be welded together to form a positive electrode tab bundle.

The negative electrode, which emits electrons through a connected wire, may have a structure in which an active material and the like is applied to a negative electrode substrate formed of a thin metal plate. At this time, a coating layer may be formed on a portion of the negative electrode, and a negative electrode uncoated portion on which the coating layer is not formed may become a negative electrode tab. These negative electrode tabs may be welded together to form a negative electrode tab bundle.

The separators 120, 220 are thin films of insulating material interposed between the electrodes 110, 210, and electrodes 110, 210 having different polarities may be positioned on one side and the other side of the separators 120, 220, respectively. That is, the separators 120, 220 may block direct contact between the positive electrode and the negative electrode. Additionally, a plurality of pores having a diameter of 1 µm or less through which positive ions such as lithium pass may be formed in the separators 120, 220. The separators 120, 220 may be made of various materials. For example, a synthetic resin such as polyethylene (PE) or polypropylene (PP) may be used for the separators 120, 220.

The electrode tab bundles 130, 230 may be the positive electrode tab bundle or the negative electrode tab bundle described above. These electrode tab bundles 130, 230 are respectively formed for each of the electrode assemblies 100, 200, and thus the length of the electrode tab bundles 130, 230 may remain constant regardless of the number of electrode assemblies 100, 200 included inside the case 500.

Specifically, when only one electrode assembly is accommodated inside the case 500, the length of the electrode tab bundle of the electrode assembly becomes longer as the thickness of the electrode assembly becomes thicker. The electrode tab bundle is formed by welding after the electrode tabs (electrode uncoated portions) constituting the electrode assembly are folded, and this is because the thicker the thickness of the electrode assembly, the longer the length of the folded part of the electrode tabs.

Unlike the above case where one electrode assembly is formed thickly, the secondary battery 10 according to the present disclosure increases the overall energy capacity in such a way that multiple separate electrode assemblies 100, 200 having a constant thickness are included inside the case 500. Here, the electrode tab bundles 130, 230 are formed for each of the electrode assemblies 100, 200, so that the length at which each of the electrode tabs constituting the electrode tab bundles 130, 230 is folded may always remain constant.

Therefore, the secondary battery 10 according to the present disclosure has an advantageous effect of improving the overall energy capacity without increasing the length of the electrode tabs. Additionally, in the secondary battery 10 according to the present disclosure, the length of the electrode tabs constituting the electrode tab bundles 130, 230 is kept relatively short, so that there is an advantageous effect of preventing the electrode tabs from being easily torn by an external impact or from being easily broken during the electrode rolling process.

Meanwhile, the interposed electrode 300 is an electrode interposed between the plurality of electrode assemblies 100, 200, and one side and the other side of the interposed electrode 300 may be in contact with the separators 120, 220 included in the electrode assemblies 100, 200, respectively. That is, the outermost layer of the plurality of electrode assemblies 100, 200 may be configured as the separators 120, 220.

Additionally, the interposed electrode 300 is the same electrode plate as the electrodes 110, 210 included in the electrode assemblies 100, 200, and may be a positive electrode or a negative electrode. At this time, when the interposed electrode 300 is configured as a positive electrode plate, there is an advantageous effect of further improving the overall energy capacity of the secondary battery 10.

Meanwhile, the electrode tab bundles 130, 230 and the interposed electrode 300, each included in the plurality of electrode assemblies 100, 200 may be connected to the electrode lead 400. The electrode tab bundles 130, 230 and the interposed electrode 300 may be connected to the electrode lead 400 in various ways. For example, the electrode uncoated portion of the interposed electrode 300 and the electrode tab bundles 130, 230 may be coupled to the electrode lead 400 by welding.

The electrode uncoated portion of the interposed electrode 300 is an area of the interposed electrode 300 that is not coated with the active material, and may be a positive electrode uncoated portion or a negative electrode uncoated portion. This electrode uncoated portion of the interposed electrode 300 may be coupled to the electrode tab bundles 130, 230 by welding in a state of being folded to one side or the other side.

The case 500 is an exterior material that accommodates the plurality of electrode assemblies 100, 200 and the interposed electrode 300, and the plurality of electrode assemblies 100, 200 and the interposed electrode 300 may be accommodated inside the case 500 in a state of being impregnated with an electrolyte. The case 500 may be made of various materials. For example, the case 500 may be a prismatic case made of a metal such as aluminum or a material such as resin. Additionally, the case 500 may be a pouch-type exterior material formed of a laminate sheet composed of an inner resin layer, a metal layer, and an outer resin layer.

When the case 500 is a pouch-type exterior material, the metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The outer resin layer coated on the outer surface of the metal layer should have excellent resistance to the external environment in order to protect the electrode assembly from the outside, and thus the outer resin layer is required to have excellent tensile strength and durability relative to its thickness. Materials for the outer resin layer may include a polyester-based resin such as polyethylene terephthalate (PET) and polyethylene naphthalate (PEN), a polyolefin-based resin such as polyethylene and polypropylene, and the like.

The inner resin layer coated on the inner surface of the metal layer may be made of a polyolefin-based resin. For example, materials for the inner resin layer may include casted polypropylene (CPP), chlorinated polypropylene, polyethylene, ethylene propylene copolymer, polyethylene and acrylic acid copolymer, polypropylene and acrylic acid copolymer, and the like.

Meanwhile, the case 500 may be configured in various ways. For example, the case 500 may be composed of an upper case 510 and a lower case 520, and the upper case 510 and the lower case 520 may be coupled to each other to form a receiving space that accommodates a plurality of electrode assemblies 100, 200. Here, the upper case 510 and the lower case 520 may be coupled in various ways. For example, the upper case 510 and the lower case 520 may be coupled by welding or thermal fusion.

Meanwhile, the electrode assemblies 100, 200 may include a first electrode assembly 100 provided above the interposed electrode 300 and a second electrode assembly 200 provided below the interposed electrode 300. That is, the secondary battery 10 according to the present disclosure may have a two-stage structure in which the first electrode assembly 100 and the second electrode assembly 200 are stacked with the interposed electrode 300 interposed therebetween.

Here, a first electrode tab bundle 130 provided in the first electrode assembly 100 may be welded to one side of the electrode lead 400, and a second electrode tab bundle 230 provided in the second electrode assembly 200 may be welded to the other side of the electrode lead 400. Additionally, the electrode uncoated portion of the interposed electrode 300 may be welded to one side of the electrode lead 400 together with the first electrode tab bundle 130, or to the other side of the electrode lead 400 together with the second electrode tab bundle 230.

Meanwhile, the electrode lead 400 may include a coupling portion 410 where the first electrode tab bundle 130, the second electrode tab bundle 230, and the electrode uncoated portion of the interposed electrode 300 are coupled by welding, and a protrusion 420 connected to this coupling portion 410 and protruding to the outside of the case 500. Here, the coupling portion 410 may be formed thicker than the protrusion 420.

That is, the first electrode tab bundle 130, the second electrode tab bundle 230, and the electrode uncoated portion of the interposed electrode 300 are welded to the thick coupling portion 410, so that even when heat and pressure are applied to the coupling portion 410, the coupling portion 410 may be prevented from being broken. Therefore, the operator may increase the welding strength between the first electrode tab bundle 130, the second electrode tab bundle 230, and the electrode uncoated portion of the interposed electrode 300 and the coupling portion 410, so that even when an external impact or the like is applied to the secondary battery 10, there is an advantageous effect of preventing the coupling between the first electrode tab bundle 130, the second electrode tab bundle 230, and the electrode uncoated portion of the interposed electrode 300 and the coupling portion 410 from being separated.

Meanwhile, the coupling portion 410 and the protrusion 420 may have various shapes. Specifically, the coupling portion 410 may have a cuboidal box shape with a fillet formed at the corner portion, and the protrusion 420 may have a terminal shape protruding from one surface of the coupling portion 410 in an outward direction of the case 500.

The upper case 510 and the lower case 520 described above are coupled by thermal fusion or the like to form a sealed internal space, and the terminal-shaped protrusion 420 may pass between the upper case 510 and the lower case 520. At this time, a sealing member that seals the internal space of the case 500 may be interposed between the upper case 510 and the lower case 520 and the protrusion 420.

The first electrode tab bundle 130, the second electrode tab bundle 230, and the electrode uncoated portion of the interposed electrode 300 may be coupled to the coupling portion 410 in various ways. For example, as shown in FIG. 2, the first electrode tab bundle 130 and the electrode uncoated portion of the interposed electrode 300 may be coupled to an upper surface of the coupling portion 410, and the second electrode tab bundle 230 may be coupled to a lower surface of the coupling portion 410. Additionally, as shown in FIG. 3, the first electrode tab bundle 130 may be coupled to an upper surface of the coupling portion 410, and the second electrode tab bundle 230 and the electrode uncoated portion of the interposed electrode 300 may be coupled to a lower surface of the coupling portion 410.

### Method for manufacturing secondary battery

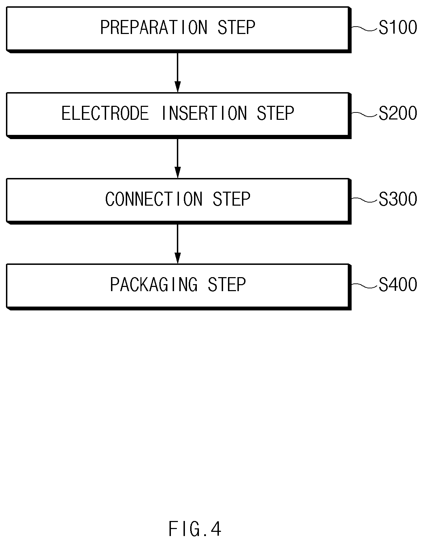

FIG. 4 is a flow chart sequentially showing a method for manufacturing a secondary battery according to another embodiment of the present disclosure.

Referring to FIG. 4, the method for manufacturing a secondary battery according to the present disclosure may include a preparation step S100 of preparing a plurality of electrode assemblies 100, 200 each having electrode tab bundle 130, 230 and an interposed electrode 300, an electrode insertion step S200 of interposing the interposed electrode 300 between the plurality of electrode assemblies 100, 200, a connection step S300 of connecting the electrode tab bundles 130, 230 of each of the plurality of electrode assemblies 100, 200 and an electrode tab of the interposed electrode 300 to an electrode lead 400, and a packaging step S400 of accommodating the plurality of electrode assemblies 100, 200 and the interposed electrode 300 in a case 500.

In this case, the electrode tab bundles 130, 230 of the manufactured secondary battery 10 are respectively provided in each of the electrode assemblies 100, 200, so that even when a plurality of electrode assemblies 100, 200 are included within the case 500, there is an advantageous effect that the length of the electrode tab bundles 130, 230 does not increase.

Meanwhile, the preparation step S100 is a step of preparing a plurality of electrode assemblies 100, 200 and an interposed electrode 300, and each of the plurality of electrode assemblies 100, 200 may be provided with electrode tab bundles 130, 230. The interposed electrode 300 is the same electrode plate as the electrodes 110, 210 included in the electrode assemblies 100, 200, and may be a positive electrode or a negative electrode.

Here, the electrode tab bundles 130, 230 are respectively formed for each of the electrode assemblies 100, 200, and thus the length of the electrode tabs that are folded and welded to form the electrode tab bundles 130, 230 may remain constant. Specifically, the electrode uncoated portions (electrode tabs) of the electrodes 110, 210 included in each of the electrode assemblies 100, 200 are folded and then welded into one to form the electrode tab bundles 130, 230, and the thickness of the electrode assemblies 100, 200 is determined in advance, so that the length of the electrode tabs that are folded and welded may always remain constant.

The electrode insertion step S200 is a step of interposing an interposed electrode 300 between electrode assemblies 100, 200 in which electrode tab bundles 130, 230 are formed respectively, and may be a step of improving the overall energy capacity of the secondary battery 10. For example, the electrode insertion step S200 may be a step of forming a stack by vertically stacking the electrode assemblies 100, 200 in which the electrode tab bundles 130, 230 are formed respectively and the interposed electrode 300.

This stack is not formed by a single thick electrode assembly, but formed by merging a plurality of electrode assemblies 100, 200, so that the length of the electrode tab bundles 130, 230 may always remain constant. That is, according to the method for manufacturing a secondary battery of the present disclosure, a secondary battery 10 with improved overall energy capacity may be manufactured without increasing the length of the electrode tabs.

Meanwhile, the operator may interpose the interposed electrode 300, which is a positive electrode, between the electrode assemblies 100, 200 in the electrode insertion step S200. In this case, there is an advantageous effect of further improving the overall energy capacity of the secondary battery 10.

The connection step S300 is a step of connecting the electrode tab bundles 130, 230 and the electrode tab (electrode uncoated portion) of the interposed electrode 300 to the electrode lead 400, and may be configured in various ways. Here, the electrode tab bundles 130, 230 and the electrode uncoated portion of the interposed electrode 300 may be connected to the electrode lead 400 in various ways. For example, the electrode tab bundles 130, 230 and the electrode uncoated portion of the interposed electrode 300 may be coupled to the electrode lead 400 by welding.

The packaging step S400 is a step of packaging a plurality of electrode assemblies 100, 200 and the interposed electrode 300, and may be configured in various ways. For example, the packaging step S400 may be a step of inserting a stack composed of the plurality of electrode assemblies 100, 200 and the interposed electrode 300 into a case 500 composed of an upper case 510 and a lower case 520, and then coupling the upper case 510 and the lower case 520 by thermal fusion or welding. When coupling the upper case 510 and the lower case 520, the internal space of the case 500 into which the stack is inserted may be sealed from the outside.

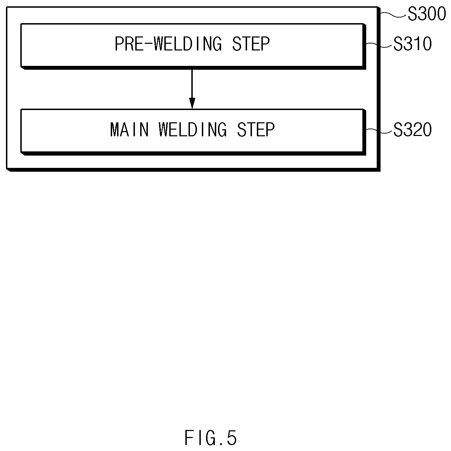

FIG. 5 is a flow chart sequentially showing the connection step of FIG. 4.

Referring to FIG. 5, the connection step S300 may include a pre-welding step S310 of welding the electrode uncoated portion of the interposed electrode 300 interposed between the plurality of electrode assemblies 100, 200 to the adjacent electrode tab bundles 130, 230, and a main welding step S320 of welding the electrode tab bundles 130, 230 of each of the plurality of electrode assemblies 100, 200 and the electrode uncoated portion of the interposed electrode 300 to the electrode lead 400.

In the pre-welding step S310, the electrode uncoated portion of the interposed electrode 300 may be welded to the first electrode tab bundle 130 of the first electrode assembly 100 provided thereabove, or to the second electrode tab bundle 230 of the second electrode assembly 200 provided therebelow.

Here, the electrode uncoated portion of the interposed electrode 300 is an area of the interposed electrode 300 that is not coated with an active material, and may be a positive electrode uncoated portion or a negative electrode uncoated portion. In the pre-welding step S310, the electrode uncoated portion of the interposed electrode 300 may be coupled to the electrode tab bundles 130, 230 by welding in a state of being folded to one side or the other side.

Specifically, the pre-welding step S310 may be a step of welding the electrode uncoated portion of the interposed electrode 300 and the first electrode tab bundle 130 in a state where the electrode uncoated portion of the interposed electrode 300 is folded to one side. Additionally, the pre-welding step S310 may be a step of welding the electrode uncoated portion of the interposed electrode 300 and the second electrode tab bundle 230 in a state where the electrode uncoated portion of the interposed electrode 300 is folded to the other side.

When the electrode uncoated portion of the interposed electrode 300 is welded to the first electrode tab bundle 130 to form a welded body, this welded body may be welded to the upper surface of the electrode lead 400 in the main welding step S320. At this time, the second electrode tab bundle 230 may be welded to the lower surface of the electrode lead 400.

When the electrode uncoated portion of the interposed electrode 300 is welded to the second electrode tab bundle 230 to form a welded body, this welded body may be welded to the lower surface of the electrode lead 400 in the main welding step S320. At this time, the first electrode tab bundle 130 may be welded to the upper surface of the electrode lead 400.

Meanwhile, the main welding step S320 may be a step of welding the electrode tab bundles 130, 230 of each of the first and second electrode assemblies 100, 200 and the electrode uncoated portion of the interposed electrode 300 to the coupling portion 410 of the electrode lead 400.

Specifically, when the electrode uncoated portion of the interposed electrode 300 is welded to the first electrode tab bundle 130 to form a welded body, this welded body may be welded to the upper surface of the coupling portion 410 in the main welding step S320. At this time, the second electrode tab bundle 230 may be welded to the lower surface of the coupling portion 410.

Additionally, when the electrode uncoated portion of the interposed electrode 300 is welded to the second electrode tab bundle 230 to form a welded body, this welded body may be welded to the lower surface of the coupling portion 410 in the main welding step S320. At this time, the first electrode tab bundle 130 may be welded to the upper surface of the coupling portion 410.

Here, the first electrode tab bundle 130, the second electrode tab bundle 230, and the electrode uncoated portion of the interposed electrode 300 are welded to one surface and/or the other surface of the thick coupling portion 410, so that even when heat and pressure are applied to the coupling portion 410, the coupling portion 410 may be prevented from being broken. Therefore, the operator may increase the welding strength between the first electrode tab bundle 130, the second electrode tab bundle 230, and the electrode uncoated portion of the interposed electrode 300 and the coupling portion 410, so that even when an external impact or the like is applied to the secondary battery 10, there is an advantageous effect of preventing the coupling between the first electrode tab bundle 130, the second electrode tab bundle 230, and the electrode uncoated portion of the interposed electrode 300 and the coupling portion 410 from being separated.

Meanwhile, when the upper case 510 and the lower case 520 are coupled by thermal fusion or welding in the packaging step S400, a protrusion 420 formed by protruding from one surface of the coupling portion 410 may be interposed between the upper case 510 and the lower case 520. At this time, a sealing member that seals the internal space of the case 500 may be interposed between the upper case 510 and the lower case 520 and the protrusion 420.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 10: | Secondary battery | 100, 200: | Electrode assembly |
| 110, 210: | Electrode | 120, 220: | Separator |
| 130, 230: | Electrode tab bundle | 300: | Interposed electrode |
| 400: | Electrode lead | 410: | Coupling portion |
| 420: | Protrusion | 500: | Case |
| 510: | Upper case | 520: | Lower case |

## Claims

1. A secondary battery, comprising:
a plurality of electrode assemblies each having an electrode tab bundle;
an interposed electrode interposed between the plurality of electrode assemblies; and
a case accommodating the plurality of electrode assemblies and the interposed electrode.

2. The secondary battery according to claim 1, further comprising:
an electrode lead connected to the electrode tab bundle of each of the plurality of electrode assemblies and an electrode tab of the interposed electrode.

3. The secondary battery according to claim 2,
wherein the electrode tab bundle is an uncoated portion assembly in which uncoated portions of electrodes, included in an electrode assembly are welded.

4. The secondary battery according to claim 2,
wherein the plurality of electrode assemblies comprise:
a first electrode assembly provided above the interposed electrode; and
a second electrode assembly provided below the interposed electrode.

5. The secondary battery according to claim 4,
wherein a first electrode tab bundle provided in the first electrode assembly is welded to one side of the electrode lead, and
a second electrode tab bundle provided in the second electrode assembly is welded to the other side of the electrode lead.

6. The secondary battery according to claim 5,
wherein the electrode lead comprises:
a coupling portion where the first electrode tab bundle and the second electrode tab bundle are coupled by welding; and
a protrusion connected to the coupling portion and protruding to the outside of the case.

7. The secondary battery according to claim 6,
wherein the coupling portion is formed thicker than the protrusion.

8. The secondary battery according to claim 5,
wherein the interposed electrode is welded to one side of the electrode lead together with the first electrode tab bundle, or to the other side of the electrode lead together with the second electrode tab bundle.

9. The secondary battery according to claim 1,
wherein an outermost layer of each electrode assembly is configured as a separator.

10. The secondary battery according to claim 1,
wherein the interposed electrode interposed between the plurality of electrode assemblies is a positive electrode.

11. A method for manufacturing a secondary battery, comprising:
a preparation step of preparing a plurality of electrode assemblies each having an electrode tab bundle and an interposed electrode;
an electrode insertion step of interposing the interposed electrode between the plurality of electrode assemblies;
a connection step of connecting the electrode tab bundle of each of the plurality of electrode assemblies and an electrode tab of the interposed electrode to an electrode lead; and
a packaging step of accommodating the plurality of electrode assemblies and the interposed electrode in a case.

12. The method for manufacturing a secondary battery according to claim 11,
wherein the connection step comprises:
a pre-welding step of welding the electrode tab of the interposed electrode interposed between the plurality of electrode assemblies to the adjacent electrode tab bundle; and
a main welding step of welding the electrode tab bundle of each of the plurality of electrode assemblies and the electrode tab of the interposed electrode to the electrode lead.

13. The method for manufacturing a secondary battery according to claim 12,
wherein in the pre-welding step,
the electrode tab of the interposed electrode is welded to the first electrode tab bundle of the first electrode assembly provided thereabove, or to the second electrode tab bundle of the second electrode assembly provided therebelow.

14. The method for manufacturing a secondary battery according to claim 12,
wherein the main welding step comprises:
a step of welding the electrode tab bundle of each of the plurality of electrode assemblies and the electrode tab of the interposed electrode to the coupling portion of the electrode lead.

15. The method for manufacturing a secondary battery according to claim 14,
wherein in the main welding step,
the first electrode tab bundle of the first electrode assembly provided above the interposed electrode is welded to one side of the coupling portion, and
the second electrode tab bundle of the second electrode assembly provided below the interposed electrode is welded to the other side of the coupling portion.

16. The method for manufacturing a secondary battery according to claim 11,
wherein in the electrode insertion step, the interposed electrode interposed between the plurality of electrode assemblies is a positive electrode.
